# EUROPÄISCHE PATENTSCHRIFT

(11) **EP 0 690 780 B1**
(45) Veröffentlichungstag und Bekanntmachung des Hinweises auf die Patenterteilung: **01.07.1998**
(21) Anmeldenummer: 94912502.5
(22) Anmeldetag: 22.03.1994
(51) Int. Cl.: B29C 67/00

(54) **VERFAHREN ZUM HERSTELLEN EINES DREDIDIMENSIONALEN OBJEKTS**
THREE-DIMENSIONAL OBJECT PRODUCTION PROCESS
PROCEDE DE PRODUCTION D'OBJETS TRIDIMENSIONNELS

(30) Priorität: 24.03.1993 DE 4309524
(43) Veröffentlichungstag der Anmeldung: 10.01.1996
(73) Patentinhaber: EOS GmbH ELECTRO OPTICAL SYSTEMS, 82152 Planegg (DE)
(72) Erfinder: LANGER, Hans, J., D-82166 Gräfelfing (DE); REICHLE, Johannes, D-81375 München (DE)
(74) Vertreter: Prüfer, Lutz H., Dipl.-Phys.
(86) Internationale Anmeldenummer: EP9400900
(87) Internationale Veröffentlichungsnummer: WO9421446

(56) Entgegenhaltungen:
- EP-A- 0 429 196
- WO-A-92/08200
- WO-A-92/20505
- KUNSTSTOF EN RUBBER, Bd.45, Nr.2, Februar 1992, ROTTERDAM NL Seiten 11 - 18, XP000240853 J. BISSCHOP & J.C. JAGT 'Stereolithografie'

## Beschreibung

Die vorliegende Erfindung betrifft ein verfahren zum Herstellen eines dreidimensionalen Objekts nach dem Oberbegriff des Anspruchs 1.

Ein derartiges verfahren ist aus der EP 0 171 069 A bekannt. Bei einem derartigen Verfahren kann zwar eine gute Oberfläche erhalten werden, es tritt aber das Problem auf, daß eine Maßhaltigkeit des Objekts wegen der Verformung der einzelnen Schichten aufgrund von Schrumpfung des Materials nicht gewährleistet ist. Auch ist die Herstellungszeit lang.

Aus der EP 0 362 982 A ist es bekannt, zur Reduzierung der Verformungen entweder zunächst einzelne Streifen zu verfestigen, die mit benachbarten und darunterliegenden Streifen nur über eine Stützkonstruktion verbunden sind, oder die Schicht nur bereichsweise zu verfestigen, wobei im Objekt Spalten zwischen den Bereichen entstehen. In beiden Fällen kann jedoch keine hohe Oberflächenqualität erhalten werden.

Aus der EP-A-0 429 196 ist ein Verfahren nach dem Oberbegriff des Patentanspruches 1 bekannt. Das Vermeiden des Auftretens von Verzug und Verformung in dem gebildeten Objekt wird jedoch bei dem in dieser Druckschrift beschriebenen Verfahren dadurch erreicht, indem die Belichtung einer Schicht derart erfolgt, daß ein Begrenzungsvektor belichtet wird und das Innere mittels unterschiedlicher Techniken jeweils teilweise belichtet wird.

Aus der WO 92/20505 ist ebenfalls ein Verfahren zum Herstellen eines dreidimensionalen Objektes bekannt.

Aus der WO 92/08200 ist ebenfalls ein Verfahren nach dem Oberbegriff des Patentanspruches 1 bekannt. Stufen, die durch aufeinanderfolgende Schichten an der Oberfläche erzeugt werden, werden durch spezielle Techniken der zusätzlichen Belichtung des Stufenbereiches ausgeglichen.

Es ist Aufgabe der Erfindung, ein Verfahren der oben genannten Art derart zu verbessern, daß eine geringe Verformung des Objekts bei gleichzeitiger hoher Oberflächenqualität erhalten wird. Ferner soll die Genauigkeit der Oberfläche erhöht und der Materialverbrauch sowie die Bauzeit verringert werden.

Diese Aufgabe wird erfindungsgemäß durch ein Verfahren mit den Merkmalen des Anspruchs 1 gelöst. Weiterbildungen sind in den abhängigen Ansprüchen gekennzeichnet.

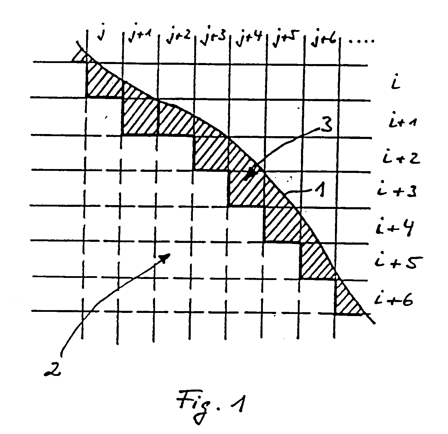

Die Erfindung wird im weiteren anhand eines Ausführungsbeispiels unter Bezug auf die Figur erläutert, die in schematischer Darstellung einen Schnitt durch einen Teil des Objekts in einer Schichtebene zeigt.

Das erfindungsgemäße Verfahren arbeitet nach dem unter dem Begriff "Stereographie" oder "Stereolithographie" bekannten Verfahren, wie es beispielsweise in der EP-A-0 171 069 dargestellt ist. Hierbei wird auf einen Träger bzw. eine bereits verfestigte Schicht eine Schicht eines flüssigen oder pulverförmigen Materials aufgetragen und durch Bestrahlen mit einem gerichteten Lichtstrahl, beispielsweise einem Laser, an dem Objekt entsprechenden Stellen verfestigt. Durch entsprechendes Verfestigen einer Vielzahl von Schichten wird das Objekt schichtweise erstellt. Zur genaueren Beschreibung dieses Verfahrens wird auf die genannte EP-A-0 171 069 Bezug genommen, die insoweit Teil dieser Anmeldung sein soll.

Eine Teilansicht einer beispielhaft herausgegriffenen Schicht ist in der Figur dargestellt, anhand der das erfindungsgemäße Verfahren zunächst im Prinzip beschrieben werden soll. In der Figur bezeichnet die Linie 1 die Kontur des herzustellenden Objekts in der Schicht. Die Fläche der Schicht ist rasterförmig in eine Vielzahl von quadratischen oder rechteckigen Einzelbereichen bzw. Voxels i,j....i+6,j+6 mit einer Seitenlänge von 0.1 bis 5mm, vorzugsweise 0.5 bis 2mm, aufgeteilt. Die Koordinatendaten der Kontur 1 sowie der einzelnen Einzelbereiche liegen in einem Rechner vor, der die Bestrahlung der Schicht steuert. Im Rechner erfolgt ein Vergleich der Konturdaten mit den Koordinatendaten der Einzelbereiche. Stellt der Rechner fest, daß ein Einzelbereich, beispielsweise der Einzelbereich i+1,j, vollständig innerhalb der Kontur 1 liegt, dann wird dieser Einzelbereich einem Kernbereich 2 zugeordnet; wird dagegen festgestellt, daß ein Einzelbereich, beispielsweise der Einzelbereich i,j, von der Kontur 1 geschnitten wird, dann wird dieser Einzelbereich einem Hüllbereich 3 zugeordnet. Damit ergibt sich ein schmaler Hüllbereich 3, der sich entlang der Konturlinie 1 mit einer im Mittel etwa der Seitenlänge der Einzelbereiche entsprechenden Breite erstreckt.

Vorzugsweise erfolgt im Rechner ausschließlich die Berechnung des Kernbereiches 2; der Hüllbereich 3 wird danach durch Subtraktion der Einzelbereiche des Kernbereiches 2 vom Gesamtkörper berechnet. Bei der Berechnung des Kernbereiches 2 werden alle Einzelbereiche markiert, die voll im Innern des Körperschnittes, also der Konturlinie 1, liegen.

Im Einzelnen erfolgt die Zuordnung der Einzelbereiche zur Hülle oder zum Kern allerdings nicht nur zweidimensional, wie oben im Prinzip erläutert, sondern dreidimensional, um eine definierte Dicke des Hüllbereichs 3 in allen drei Raumrichtungen zu erhalten.

In diesem Fall entspricht der Konturlinie 1 eine Konturfläche und bei der Berechnung des Kerngebietes werden alle Einzelbereiche markiert, die voll im Inneren dieser Konturfläche liegen. Jeder Einzelbereich i,j beinhaltet dabei neben der Information über die aktuelle Schicht auch die entsprechende Information der vorangegangenen Schichten. Hierbei werden nur diejenigen Einzelbereiche als zum Kern gehörend markiert, die in einer vorbestimmten Anzahl von vorausgehenden Schichten ebenfalls Kerngebiete darstellten bzw. darstellen würden. Die vorbestimmte Anzahl hängt dabei von der erwünschten Hüllendicke un dem räumlichen Abstand der Einzelbereiche ab; bei Schichtdicken von 0.1mm und einer Hüllendicke von 0.5mm werden beispielsweise beträgt diese Anzahl beispielsweise 5. Dieselbe Betrachtung gilt auch für nachfolgende Schichten: es werden nur diejenigen Einzelbereiche zum Kern gerechnet, die in einer vorgegebenen Anzahl von nachfolgenden Schichten ebenfalls zum Kern gehören bzw. gehören würden.

Nach der Zuordnung aller Einzelbereiche einer Schicht erfolgt die Verfestigung durch Bestrahlen der Schicht innerhalb der Einzelbereiche an den dem Objekt entsprechenden Stellen. Diese Bestrahlung erfolgt nun in unterschiedlicher Art und Weise, je nachdem ob es sich um einen Einzelbereich im Kernbereich oder einen solchen im Hüllbereich handelt. Da es im Kernbereich 2 (im Vergleich zum schmalen Hüllbereich 3) auf einen geringen Verzug, einen geringen Materialverbrauch und geringe Bauzeiten ankommt, werden dort die Einzelbereiche nicht vollflächig, sondern in Form einzelner Zellen bestrahlt bzw. verfestigt, die untereinander entweder durch schmale Stege oder vorzugsweise überhaupt nicht verbunden, sondern durch Trennfugen getrennt sind. Alternativ ist es möglich, die Einzelbereiche im Kernbereich 2 nur entlang geschlossener Linienzüge zu verfestigen, sodaß sich Hohlstrukturen wie z.B. Wabenstrukturen ergeben, in denen noch flüssiges oder pulverförmiges Material eingeschlossen ist, das nach der Verfestigung des Objekts entweder abgelassen oder durch Nachhärten verfestigt wird. Dieses Verfahren eignet sich besonders zur Vermeidung von thermischen Ausdehnungen, beispielsweise bei Ausschmelzformen, und auch zur direkten Herstellung von Gußformen. Hierbei wird das invertierte Objekt in einen einhüllenden Quader gesetzt. Hieraus ergibt sich eine Negativform, an der in der oben beschriebenen Weise eine Zerlegung in Hülle und Kern vorgenommen wird.

Im Kernbereich 2 wird die Bestrahlung derart durchgeführt, daß sich ein hoher Polymerisationsgrad und damit eine hohe Festigkeit bei geringer Verzugstendenz ergibt.

Im Hüllbereich 3 kommt es dagegen auf eine hohe Genauigkeit und Qualität der Oberfläche an der Kontur 1 an. Hierzu erfolgt die Bestrahlung bzw. Verfestigung im Hüllbereich 3 vollflächig entweder in Form nebeneinanderliegender Schraffurlinien oder einer bzw. mehrerer nebeneinanderliegenden Konturlinien, d.h. der Kontur 1 beispielsweise als Polygonzug folgenden Liniengruppen. Auch eine Kombination dieser Linientypen in einer Schicht oder in übereinanderliegenden Schichten ist möglich.

Die Bestrahlung im Kernbereich 2 und im Hüllbereich 3 einer einzigen Schicht kann gleichzeitig oder auch nacheinander durch entsprechende Steuerung mittels eines einzigen oder auch mehrerer Lichtstrahlen bzw. Laserstrahlen erfolgen, wobei die Schichtdicke im Kernbereich 2 und Hüllbereich 3 gleich ist. Es ist jedoch besonders vorteilhaft, zunächst eine Anzahl N von Schichten des Hüllbereichs 3 zu verfestigen, wobei N eine ganze Zahl darstellt. Das Material im Kernbereich 2 bleibt zunächst flüssig bzw. pulverförmig mit einer Schichtdicke, die dem N-fachen der Schichtdicke des Hüllbereichs 3 entspricht. Bei der N-ten Schicht wird auch diese dicke Schicht des Kernbereichs durch entsprechend intensives Bestrahlen verfestigt. Dadurch kann der Zeitaufwand für die Herstellung des Kerns und damit für die Herstellung des Objekts erheblich reduziert werden.

Wird der Kern nicht vollständig verfestigt, so ist es vorteilhaft, in der Hülle Öffnungen vorzusehen, durch die das im Kern verbliebene flüssige oder pulverförmige Material nach der Verfestigung des Objekts abfließen kann. Dies kann beispielsweise so erfolgen, daß in jeder n-ten Schicht Durchbrechungen des Hüllbereichs 3 vorgesehen werden, die so groß bemessen sind, daß sie ein Ausströmen des Materials zulassen, aber die Oberflächenqualität nicht beeinträchtigen.

Der besondere Vorteil des beschriebenen Verfahrens liegt darin, daß durch die übereinanderliegenden Hüllbereiche 3 eine verhältnismäßig stabile Hülle hergestellt wird, die es erlaubt, den Kernbereich mittels einer einen Verzug minimierenden Technik herzustellen, ohne daß die Stabilität des Objekts leidet. Beispielsweise ist es nur wegen dieser Hülle möglich, auf die Verbindungsstege zwischen den einzelnen Zellen oder Hohlstrukturen des Kernbereichs zu verzichten. Ferner wird die Herstellungszeit dadurch erheblich reduziert, daß im Kern, der den ganz überwiegenden Teil des Objektvolumens bildet, nur partiell verfestigt wird.

## Patentansprüche

1. Verfahren zum Herstellen eines dreidimensionalen Objekts, bei dem das Objekt durch aufeinanderfolgendes Verfestigen einzelner Schichten aus flüssigem oder pulverförmigem, verfestigbarem Material durch Einwirkung einer elektromagnetischen Strahlung erzeugt wird, wobei jede Schicht in einen inneren Kernbereich (2) und einen äußeren Hüllbereich (3) zerlegt wird und daß die Strahlungseinwirkung im Kernbereich (2) und im Hüllbereich (3) zur Erzeugung unterschiedlicher Eigenschaften beider Bereiche verschieden gesteuert wird, dadurch gekennzeichnet, daß der Hüllbereich (3) durch subtraktion in dreidimensionaler Weise von Einzelbereichen des Kernbereichs (2) von dem gesamtkörper bestimmt wird.

2. Verfahren nach Anspruch 1,
dadurch gekennzeichnet, daß die Strahlungseinwirkung im Kernbereich (2) so erfolgt, daß die Verformung des Objekts bei und nach der Verfestigung minimal ist, und daß die Strahlungseinwirkung im Hüllbereich (3) zur Erzeugung einer möglichst glatten und genauen Oberfläche erfolgt.

3. Verfahren nach Anspruch 2,
dadurch gekennzeichnet, daß im Kernbereich (2) einzelne beabstandete Teilbereiche verfestigt werden, und daß gegebenfalls die Zwischenbereiche zwischen den Teilbereichen nach Verfestigen der Teilbereiche einer Schicht oder nach Verfestigen aller Teilbereiche des Objekts ebenfalls verfestigt werden.

4. Verfahren nach Anspruch 2 oder 3
dadurch gekennzeichnet, daß im Kernbereich (2) einzelne Streifen verfestigt werden, die mit benachbarten und darunterliegenden Streifen über eine Stützkonstruktion verbunden sind.

5. Verfahren nach Anspruch 2,
dadurch gekennzeichnet, daß im Kernbereich (2) zunächst Teilbereiche einer Schicht verfestigt werden und dabei mit darunterliegenden Teilbereichen der vorher verfestigten Schicht zu mehrschichtigen Zellen verbunden werden, daß danach die Teilbereiche mit den benachbarten Teilbereichen derselben Schicht durch Verfestigung von schmalen Verbindungsbereichen zwischen den Teilbereichen in Form von Verbindungsstegen verbunden werden, und daß schließlich die Zwischenbereiche zwischen den Teilbereichen verfestigt werden.

6. Verfahren nach Anspruch 5,
dadurch gekennzeichnet, daß die Verbindungsbereiche erst nach einer Wartezeit verfestigt werden, die einer Schrumpfung der Teilbereiche um mindestens ein vorgegebenes Maß entspricht.

7. Verfahren nach Anspruch 3,
dadurch gekennzeichnet, daß die Teilbereiche zur Erzeugung von Hohlstrukturen, vorzugsweise Wabenstrukturen, gebildet werden.

8. Verfahren nach einem der vorhergehenden Ansprüche,
dadurch gekennzeichnet, daß im Hüllbereich (3) dicht aneinanderliegende Teilbereiche verfestigt werden.

9. Verfahren nach einem der vorhergehenden Ansprüche,
dadurch gekennzeichnet, daß die Strahlungseinwirkung im Hüllbereich (3) entlang einer bzw. mehrerer Linien erfolgt, die den äußeren Rand des Hüllbereichs beschreiben bzw. zu diesem parallel sind.

10. Verfahren nach einem der vorhergehenden Ansprüche,
dadurch gekennzeichnet, daß die Schichtdicke im Hüllbereich (3) geringer als im Kernbereich gewählt wird.

11. Verfahren nach Anspruch 10,
dadurch gekennzeichnet, daß zunächst eine ganze Zahl N von Schichten des Hüllbereichs (3) verfestigt werden und danach eine Schicht des Kernbereichs (2) mit einer dem N-fachen der Dicke der Hüllbereichsschichten entsprechenden Schichtdicke verfestigt wird.

12. Verfahren nach einem der vorhergehenden Ansprüche
dadurch gekennzeichnet, daß für den Hüllbereich (3) Volumenelemente des Objekts in einer Schicht definiert werden, die innerhalb eines vorgegebenen Abstands vom Rand des Objekts in dieser Schicht liegen.

13. Verfahren nach Anspruch 12,
dadurch gekennzeichnet, daß solche Volumenelemente definiert werden, die in einer Schicht und/oder in einer vorbestimmten Anzahl von vorhergehenden und/oder nachfolgenden Schichten dieser Schicht vom Rand bzw. der Kontur des Objekts berührt oder geschnitten werden.

14. Verfahren nach einem der vorhergehenden Ansprüche,
dadurch gekennzeichnet, daß für den Hüllbereich (3) eine Dicke von 0.1 bis 5mm, vorzugsweise 0.5 bis 2mm, gewählt wird.

15. Verfahren nach einem der vorhergehenden Ansprüche,
dadurch gekennzeichnet, daß im Hüllbereich (3) Öffnungen gebildet werden, durch die unverfestigtes Material aus dem Kernbereich (2) ausfließen kann.

16. Verfahren nach einem der Ansprüche 1 bis 15, dadurch gekennzeichnet, daß der Hüllbereich (3) eine definierte Dicke aufweist, wobei seine Breite in einer Schicht im Mittel etwa der Seitenlänge der Einzelbereiche entspricht.

17. Verwendung eines Verfahrens nach einem der Ansprüche 1 bis 15 zur Herstellung von Gußformen, wobei das invertierte Objekt in einen einhüllenden Quader gesetzt wird und daraus eine Negativform gewonnen wird, an der die Zerlegung in Hülle und Kern vorgenommen wird.

## Claims

1. Process for producing a three-dimensional object, in which the object is created by successive solidifying of individual layers of liquid or powdered, solidifiable material by the action of an electromagnetic radiation, each layer being broken down into an inner core region (2) and an outer shell region (3) and that the action of radiation in the core region (2) and in the shell region (3) is controlled differently to create different properties of the two regions, characterized in that the shell region (3) is determined by subtraction in a three-dimensional way of individual regions of the core region (2) from the overall body.

2. Process according to Claim 1, characterized in that the action of radiation in the core region (2) takes place in such a way that the deformation of the object during and after the solidification is minimal, and in that the action of radiation in the shell region (3) takes place to create as smooth and accurate a surface as possible.

3. Process according to Claim 2, characterized in that, in the core region (2), individual spaced-apart subregions are solidified, and in that, if appropriate, the intermediate regions between the subregions are likewise solidified after solidifying the subregions of one layer or after solidifying all the subregions of the object.

4. Process according to Claim 2 or 3, characterized in that, in the core region (2), individual strips are solidified which are joined to neighbouring strips and strips lying underneath by means of a supporting structure are solidified.

5. Process according to Claim 2, characterized in that, in the core region (2), first of all subregions of one layer are solidified and are thereby joined to subregions lying underneath of the previously solidified layer to form multi-layered cells, in that thereafter the subregions are joined to the neighbouring subregions of the same layer by solidifying of narrow joining regions between the subregions in the form of joining webs, and in that finally the intermediate regions between the subregions are solidified.

6. Process according to Claim 5, characterized in that the joining regions are solidified only after a waiting time, which corresponds to a shrinkage of the subregions by at least a given amount.

7. Process according to Claim 3, characterized in that the subregions are formed to create hollow structures, preferably honeycomb structures.

8. Process according to one of the preceding claims, characterized in that, in the shell region (3), sub-regions lying closely next to one another are solidified.

9. Process according to one of the preceding claims, characterized in that the action of radiation in the shell region (3) takes place along one or more lines, which describe the outer edge of the shell region or are parallel to the latter.

10. Process according to one of the preceding claims, characterized in that the layer thickness in the shell region (3) is chosen to be less than in the core region.

11. Process according to Claim 10, characterized in that first of all a whole number N of layers of the shell region (3) are solidified and thereafter a layer of the core region (2) is solidified with a layer thickness corresponding to N times the thickness of the shell region layers.

12. Process according to one of the preceding claims, characterized in that, for the shell region (3), there are defined in a layer volume elements of the object which lie within a given distance from the edge of the object in this layer.

13. Process according to Claim 12, characterized in that those volume elements which are touched or intersected by the edge or the contour of the object in a layer and/or in a predetermined number of preceding and/or subsequent layers of this layer are defined.

14. Process according to one of the preceding claims, characterized in that, for the shell region (3), a thickness of 0.1 to 5 mm, preferably 0.5 to 2 mm, is chosen.

15. Process according to one of the preceding claims, characterized in that, in the shell region (3), openings through which the unsolidified material can flow out of the core region (2) are formed.

16. Process according to one of Claims 1 to 15, characterized in that the shell region (3) has a defined thickness, its width in a layer corresponding on average to approximately the side length of the individual regions.

17. Use of a process according to one of Claims 1 to 15 for producing casting moulds, the inverted object being placed into an enveloping block and a negative mould obtained from it, on which the breakdown into shell and core is performed.

## Revendications

1. Procédé de fabrication d'un objet tridimensionnel, dans lequel l'objet est réalisé par le durcissement consécutif de chaque couche d'un matériau durcissable, liquide ou en poudre, sous l'action d'un rayonnement électromagnétique, chaque couche étant divisée en une zone centrale intérieure (2) et une zone de bordure extérieure (3) et l'effet du rayonnement étant commandé différemment dans la zone centrale (2) et dans la zone de bordure (3), afin d'obtenir des propriétés différentes dans les deux zones, caractérisé en ce que la zone de bordure (3) est déterminée selon une méthode tridimensionnelle par la soustraction des zones individuelles dans la zone centrale (2) de l'ensemble du corps.

2. Procédé selon la revendication 1, caractérisé en ce que l'effet du rayonnement dans la zone centrale (2) est exercé de telle sorte que la déformation de l'objet pendant et après le durcissement est réduite au minimum et en ce que l'effet du rayonnement dans la zone de bordure (3) est exercé de manière à obtenir une surface si possible lisse et précise.

3. Procédé selon la revendication 2, caractérisé en ce que des zones partielles de la zone centrale (2), séparées et écartées les unes des autres, sont durcies, et en ce que, le cas échéant, les zones intermédiaires entre les zones partielles seront également durcies après le durcissement des zones partielles d'une couche ou après le durcissement de toutes les zones partielles de l'objet.

4. Procédé selon la revendication 2 ou 3, caractérisé en ce que l'on durcit dans la zone centrale (2) des bandes séparées, qui sont reliées aux bandes contiguës et sous-jacentes par une construction d'appui.

5. Procédé selon la revendication 2, caractérisé en ce que l'on durcit dans la zone centrale (2) d'abord des zones partielles d'une couche, qui à cet effet seront reliées aux zones partielles sous-jacentes de la couche précédemment durcie, pour former des cellules à plusieurs couches, en ce que les zones partielles sont ensuite reliées aux zones partielles contiguës de la même couche par le durcissement des zones de liaison étroites entre les zones partielles sous forme de barrettes de liaison, et en ce que l'on durcit enfin les zones intermédiaires entre les zones partielles.

6. Procédé selon la revendication 5, caractérisé en ce que les zones de liaison ne sont durcies qu'après un temps d'attente qui correspond a un retrait du matériau dans les zones partielles égal à au moins une valeur donnée.

7. Procédé selon la revendication 3, caractérisé en ce que les zones partielles sont réalisées de manière à obtenir des structures alvéolaires, de préférence des structures en nids d'abeilles.

8. Procédé selon l'une quelconque des revendications précédentes, caractérisé en ce que, dans la zone de bordure (3), des zones partielles situées jointivement les unes à côté des autres sont durcies.

9. Procédé selon l'une quelconque des revendications précédentes, caractérisé en ce que l'effet de rayonnement est exercé dans la zone de bordure (3) le long d'une ou plusieurs lignes qui tracent le bord extérieur de la zone de bordure ou sont parallèles à celui-ci.

10. Procédé selon l'une quelconque des revendications précédentes, caractérisé en ce que l'épaisseur de la couche dans la zone de bordure (3) a été choisie inférieure à celle dans la zone centrale.

11. Procédé selon la revendication 10, caractérisé en ce que tout d'abord un nombre entier N de couches dans la zone de bordure (3) sont durcies et ensuite une couche dans la zone centrale (2), dont l'épaisseur est égale à N fois l'épaisseur des couches de la zone de bordure, est durcie.

12. Procédé selon l'une quelconque des revendications précédentes, caractérisé en ce que l'on définit pour la zone de bordure (3) des éléments volumiques de l'objet dans une couche, lesquels sont situés à l'intérieur de cette couche à une distance donnée du bord de l'objet.

13. Procédé selon la revendication 12, caractérisé en ce que ces éléments volumiques sont définis en contact avec le bord ou le contour de l'objet ou coupés par ledit bord ou contour dans une couche et/ou dans un nombre donné de couches déposées précédemment et/ou ultérieurement à cette couche.

14. Procédé selon l'une quelconque des revendications précédentes, caractérisé en ce que l'on choisit pour la zone de bordure (3) une épaisseur comprise entre 0,1 et 5 mm, de préférence entre 0,5 et 2 mm.

15. Procédé selon l'une quelconque des revendications précédentes, caractérisé en ce que des orifices sont réalisés dans la zone de bordure (3), par lesquels le matériau non durci dans la zone centrale (2) peut s'écouler.

16. Procédé selon l'une quelconque des revendications 1 à 15, caractérisé en ce que la zone de bordure (3) présente une épaisseur définie, sa largeur dans une couche étant égale en moyenne à pratiquement la longueur d'un côté des zones individuelles.

17. Mise en oeuvre d'un procédé selon l'une quelconque des revendications 1 à 15, pour la fabrication de moules en fonte, dans lequel l'objet inverti est posé dans un parallélépipède formant une gaine, afin d'en obtenir un moule négatif, sur lequel sera exécuté la division en zone de bordure et zone centrale.
